Europäisches Patentamt

**European Patent Office**

**Office européen des brevets**

(11) Numéro de publication : **0 036 818**
**B1**

(12) FASCICULE DE BREVET EUROPÉEN

(45) Date de publication du fascicule du brevet :
25.07.84

(21) Numéro de dépôt : 81400448.7

(22) Date de dépôt : 20.03.81

(51) Int. Cl.³ : **G 03 B 11/00**

(54) Dispositif porte-accessoires pour objectifs d'appareils de prises de vues photographiques et pare-soleil utilisable avec ce dispositif.

(30) Priorité : 20.03.80 FR 8006225

(43) Date de publication de la demande :
30.09.81 Bulletin 81/39

(45) Mention de la délivrance du brevet :
25.07.84 Bulletin 84/30

(84) Etats contractants désignés :
AT BE CH DE GB IT LI LU NL SE

(56) Documents cités :
FR-A- 1 203 564
FR-A- 2 420 150
JP-A-45 032 290
JP-A-56 019 070
US-A- 4 137 540
Kodak Photo Information Book 1969, "Professional-blende" Fa Hasselblad 1

(73) Titulaire : **Coquin, Jean-Claude**
**15, Rue Jean Bologne**
**F-75016 Paris (FR)**

(72) Inventeur : **Coquin, Jean-Claude**
**15, Rue Jean Bologne**
**F-75016 Paris (FR)**

(74) Mandataire : **Nony, Michel**
**29, rue Cambacérès**
**F-75008 Paris (FR)**

## Description

La présente invention concerne un dispositif porte-accessoires pour objectif d'appareils de prises de vue photographiques pour objectif d'appareils de prises de vues photographiques et un pare-soleil utilisable avec ce dispositif. On connaît d'après la demande de brevet européen du demandeur n° 79 400 165.1 publiée sous le numéro EP-A-0 004 246 un dispositif porte-accessoires pour appareil de prise de vues, essentiellement caractérisé par le fait qu'il comporte un corps, un élément intermédiaire de montage du corps à l'objectif de l'appareil de prise de vues, ledit élément de montage étant constitué d'une bague annulaire amovible, munie d'un filetage externe pour son vissage sur l'objectif, ladite bague étant susceptible d'être mise en place dans un logement correspondant dudit corps de façon à permettre un mouvement relatif de rotation dudit corps par rapport audit objectif, ledit corps présentant en outre sur son côté opposé au logement de ladite bague au moins une paire de gorges permettant de recevoir différents accessoires photographiques, notamment des filtres.

Dans un mode particulier de réalisation, les gorges de réception d'accessoires sont réalisées dans des flasques, sensiblement parallèles, opposées, en déport vers l'extérieur perpendiculairement audit corps.

Dans un mode de réalisation préféré de cette demande de brevet antérieure, le logement du corps pour la réception de la bague de montage se présente sous la forme d'une gorge annulaire s'étendant autour de la majeure partie d'une découpe circulaire réalisée dans ledit corps et de dimension correspondant au diamètre externe de la bague, une butée étant prévue pour immobiliser latéralement la bague dans son logement tout en permettant une rotation relative de la bague et du corps.

Selon cette demande de brevet antérieure, il est en outre prévu de munir le corps de moyens permettant la mise en place d'un élément supplémentaire, notamment d'un pare-soleil, qui de préférence se présente sous la forme d'un boîtier creux, notamment de section carrée à bords arrondis.

La présente demande vise à apporter des perfectionnements au dispositif antérieur en vue de permettre notamment le montage, sur un objectif d'appareil de prises de vues, de plusieurs corps, du type défini dans la demande de brevet antérieure, permettant la mise en place sur un même objectif d'un plus grand nombre d'accessoires tels que des filtres et/ou des pare-soleil, le nombre et la disposition relative des accessoires pouvant être par ailleurs modifiés à volonté.

La présente demande vise également dans une forme de réalisation particulière à perfectionner le dispositif selon la demande de brevet antérieure en ce qui concerne les caractéristiques du corps et du pare-soleil en vue de la mise en place de celui-ci.

Le dispositif selon la présente invention se caractérise essentiellement par le fait qu'il comporte au moins un élément d'adaptation comportant d'une part des moyens lui permettant d'être mis en place dans le logement prévu dans ledit corps pour la réception de la bague de montage, lesdits moyens permettant une rotation relative de l'élément d'adaptation par rapport audit corps tout en assurant son immobilisation latérale dans ledit corps, et d'autre part des moyens permettant la mise en place de l'élément d'adaptation entre les gorges en regard des flasques opposés du corps, cesdits moyens pour la mise en place entre les gorges permettant un déplacement coulissant en translation de l'élément d'adaptation par rapport audit corps.

On comprend qu'avec de telles caractéristiques il est possible de mettre en place sur un même objectif deux corps séparés par un élément d'adaptation, cet élément d'adaptation étant susceptible de coulisser par rapport au corps mis en place sur l'objectif par l'intermédiaire de sa bague de montage, l'autre corps étant susceptible d'un mouvement relatif de rotation par rapport à l'élément d'adaptation, c'est-à-dire par rapport au premier corps et à l'objectif. En multipliant le nombre d'éléments d'adaptation, qui jouent ainsi chacun le rôle d'une tourelle, on peut bien entendu disposer un nombre correspondant de corps en succession sur un même objectif d'appareil de prise de vues.

Dans un mode particulier de réalisation, les moyens prévus sur ledit élément d'adaptation et permettant sa rotation par rapport audit corps comprennent une collerette faisant radialement saillie dudit élément et délimitée par une bordure d'extrémité, chaque élément d'adaptation étant ainsi mis en place dans un corps de la même manière qu'une bague de montage d'un corps à l'objectif.

Les moyens prévus sur ledit élément d'adaptation et permettant sa réception entre les gorges en regard des flasques du corps sont constitués par deux faces droites parallèles d'extrémité de l'élément d'adaptation, réalisé sous forme de plaquette, et dont l'écartement correspond à la distance entre les fonds des gorges en regard des flasques dudit corps, l'épaisseur de la plaquette correspond à la largeur desdites gorges. L'élément d'adaptation est ainsi mis en place dans ledit corps de la même manière qu'un accessoire tel qu'un filtre plan, la mobilité en translation de l'élément d'adaptation par rapport au corps permettant ainsi de modifier la disposition latérale relative de deux corps montés de part et d'autre dudit élément d'adaptation.

Selon une autre caractéristique de la présente invention, le corps présente, de préférence sur les faces externes de ses flasques des organes tels que des pattes en saillie sur lesquelles peuvent s'engager par des orifices correspondants des languettes d'un accessoire tel qu'un pare-soleil.

La présente invention a également pour objet un accessoire tel qu'un pare-soleil formé d'un boîtier creux, de préférence de section carrée à bords arrondis comportant de telles languettes munies d'orifice pour l'engagement sur ledit corps, ledit pare-soleil comportant en outre dans les faces internes de son boîtier des pattes en saillie similaires à celles portées par les flasques dudit corps et permettant la fixation l'un sur l'autre de deux pare-soleil.

Avantageusement, l'élément d'adaptation selon l'invention comporte en outre des pattes en saillie similaires à celles portées par le corps et le pare-soleil et susceptibles de s'engager dans des évidements formant des orifices correspondants ménagés à cet effet dans les faces internes du boîtier du pare-soleil, opposées à celles portant lesdites pattes en saillie.

On peut ainsi à volonté grâce à la présente invention monter sur un même objectif, dans une succession quelconque souhaitée plusieurs corps équipés chacun d'accessoires tels que des filtres plans ou circulaires, et plusieurs éléments d'adaptation et/ou pare-soleil.

D'autres avantages et caractéristiques de l'invention apparaîtront à la lecture de la description suivante d'un exemple de réalisation en se référant au dessin annexé dans lequel :

La figure 1 représente une vue en perspective éclatée des composants essentiels du dispositif selon l'invention.

La figure 2 est une vue en élévation frontale d'un élément d'adaptation du dispositif selon l'invention.

La figure 3 est une vue en coupe de l'élément d'adaptation.

La figure 4 est une vue en élévation arrière de l'élément d'adaptation.

La figure 5 est une vue en élévation latérale d'un exemple d'agencement de montage à deux corps.

La figure 6 est une vue en bout de l'agencement de la figure 5.

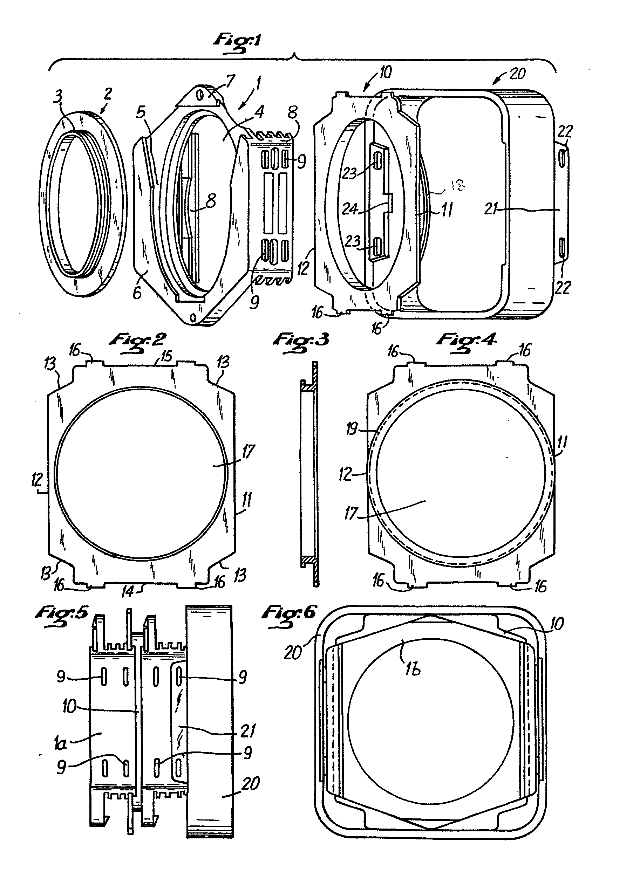

Le dispositif selon l'invention se compose d'éléments modulaires que l'on voit sur la figure 1.

Parmi ces éléments modulaires on trouve un corps 1 de faible épaisseur et de forme sensiblement hexagonale à coins arrondis dont les caractéristiques essentielles sont décrites dans la demande de brevet européen n° 79 400 165.1 précitée. Pour le montage du corps sur l'objectif on prévoit une bague intermédiaire de montage 2, également décrite dans la demande de brevet antérieur et comportant une collerette annulaire radiale 3 susceptible d'être vissée sur le filetage que présentent les objectifs d'appareils de prise de vues.

Le corps 1, réalisé de préférence d'un seul tenant par moulage présente une découpe centrale circulaire 4 et sur l'une de ces faces une gorge 5 de forme annulaire s'étendant autour de la majeure partie de la découpe circulaire centrale 4 du corps, cette gorge étant définie dans la paroi extérieure 6 du corps.

Le corps 1 comporte dans sa zone d'introduction de la bague intermédiaire de montage, dans la gorge 5, une butée de forme sensiblement triangulaire 7 destinée à retenir la bague de montage 2 dans la gorge 5 du corps. La gorge 5 s'étend sur un peu plus d'un demi-cercle de façon à maintenir élastiquement la bague intermédiaire 2 qui y est introduite.

Le corps 1 du dispositif selon l'invention comporte en outre deux flasques 8 parallèles, en regard, sur deux côtés opposés du corps.

Chacun des flasques 8 comporte sur sa face interne une pluralité de gorges, chacune des gorges sur l'un des flasques se trouvant en regard d'une des gorges sur l'autre flasque.

Les flasques 8 présentent en outre sur leurs faces externes des pattes en saillie 9, au nombre de quatre sur chaque flasque dans l'exemple représenté, et dont la fonction sera décrite par la suite.

On voit sur la figure 1, ainsi que sur les figures 2 à 4 un élément d'adaptation désigné globalement par 10 sous la forme d'une plaquette de forme d'une plaquette de forme sensiblement rectangulaire présentant deux faces droites 11 et 12 réunies par des décrochements 13 à deux faces droites 14 et 15 présentant chacune deux pattes en saillie 16 dont l'écartement et les dimensions sont identiques à l'écartement et aux dimensions des pattes en saillie 9 réalisées sur les faces externes des flasques 8 du corps 1.

La plaquette constituant l'élément d'adaptation 10 comporte une découpe centrale circulaire 17 délimitée par une collerette 18 faisant radialement saillie dudit élément, elle-même délimitée par une bordure d'extrémité 19.

Les dimensions de la plaquette constituant l'élément d'adaptation 10 sont déterminées pour permettre une coopération entre l'élément d'adaptation 10 et le corps 1 de la manière suivante.

Tout d'abord l'écartement entre les faces droites parallèles d'extrémité 11 et 12 est déterminé de manière à permettre l'introduction, ainsi que le coulissement en translation latérale, de l'élément d'adaptation 10 entre deux gorges en regard ménagées dans les flasques opposés 8 de l'élément 1.

En outre les dimensions de la collerette 18 et de sa bordure 19 sont choisies de façon à permettre l'introduction de l'élément d'adaptation dans le logement 5 du corps 1 en lieu et place d'une bague d'adaptation 2 et de manière à permettre, une fois la mise en place réalisée, un mouvement relatif de rotation de l'élément d'adaptation 10 par rapport au corps, tout en empêchant grâce à la butée 7 un mouvement relatif en sens latéral.

On peut ainsi réaliser un agencement de montage tel que celui représenté aux figures 5 et 6 où deux corps 1a et 1b sont mis en place de part et d'autre d'un élément d'adaptation 10, le corps 1a pouvant être déplacé en translation par rapport à l'élément d'adaptation 10 et donc par rapport au corps 1b, ce dernier en retour étant susceptible d'un mouvement relatif de rotation par rapport à l'élément d'adaptation 10 et donc au corps 1a. Le corps 1a peut à son tour être monté directement sur un objectif par l'intermédiaire d'une bague de montage, telle que celle représentée en 2 sur la figure 1. On peut également envisager d'autres types de montages en disposant en succession plusieurs éléments d'adaptation et donc plusieurs corps.

Comme représenté sur la figure 1 le dispositif selon l'invention comporte comme autre élément modulaire un pare-soleil désigné globalement par 20 et qui se présente avantageusement sous la forme d'un boîtier creux, d'un seul tenant, de forme sensiblement carrée à bords arrondis.

Le pare-soleil 20 comporte dans le prolongement de deux de ces faces opposées des languettes 21 présentant chacune des orifices 22 dont les dimensions et l'écartement correspondent aux dimensions et à l'écartement des pattes en saillie 9 et 16, portées respectivement par les flasques 8 du corps 1 et par l'élément d'adaptation 10. Grâce à la coopération de telles pattes en saillie et de tels orifices il est possible selon l'invention de monter un pare-soleil sur un corps comme représenté en particulier sur la figure 5 ou bien de monter le pare-soleil sur un élément d'adaptation 10.

De plus dans deux faces internes opposées le boîtier constitutif du pare-soleil 20 selon l'invention comporte des pattes en saillie 23 dont les dimensions et l'écartement sont identiques aux pattes 9 et respectivement 16, ce qui permet le montage l'un sur l'autre de deux éléments pare-soleil, les pattes en saillie 23 étant réalisées dans une zone en creux dont la profondeur délimitée par un décrochement 24 correspond à la largeur d'une languette 21.

De plus il est avantageux de munir le pare-soleil dans ses deux faces internes opposées à celles portant les pattes en saillie 23 d'orifices dont l'écartement et les dimensions correspondent aux orifices 22 des languettes extérieures du pare-soleil. On peut ainsi mettre en place directement un pare-soleil sur un élément d'adaptation ou sur un corps soit par l'intermédiaire de ces orifices dans la face interne soit par l'intermédiaire des orifices 22 sur les languettes externes.

Compte-tenu de ce qui vient d'être dit concernant les possibilités multiples de montage des éléments les uns par rapport aux autres on doit bien comprendre que l'exemple de montage des figures 5 et 6 n'illustre qu'une variante parmi de très nombreuses autres, le nombre des éléments et leur disposition relative pouvant être multipliés à volonté selon les exigences des prises de vues, en fonction en particulier du nombre de filtres ou de pare-soleil que le photographe désire utiliser.

## Revendications

1. Dispositif porte-accessoires pour appareil de prise de vues comportant un corps (1), un élément intermédiaire de montage (2) du corps à l'objectif de l'appareil de prise de vues, ledit élément de montage étant constitué d'une bague annulaire amovible (3), muni d'un filetage externe pour son vissage sur l'objectif, ladite bague étant susceptible d'être mise en place dans un logement correspondant dudit corps de façon à permettre un mouvement relatif de rotation dudit corps par rapport audit objectif, ledit corps présentant en outre, sur son côté opposé au logement de ladite bague, au moins une paire de gorges permettant de recevoir un accessoire photographique (20), notamment un filtre, caractérisé par le fait qu'il comporte au moins un élément d'adaptation (10) comportant d'une part des moyens (18, 19) pour sa mise en place dans le logement (5) prévu dans ledit corps (1) pour la réception de la bague de montage (2), lesdits moyens permettant une rotation relative de l'élément d'adaptation par rapport audit corps tout en assurant son immobilisation latérale dans ledit corps, et d'autre part des moyens (11, 12) pour la mise en place de l'élément d'adaptation (10) entre les gorges en regard des flasques (8) opposées du corps, cesdits moyens pour la mise en place entre les gorges permettant le déplacement coulissant en translation de l'élément d'adaptation par rapport audit corps.

2. Dispositif selon la revendication 1, caractérisé par le fait que les moyens prévus sur ledit élément d'adaptation et permettant sa rotation par rapport audit corps comprennent une collerette faisant radialement saillie dudit élément et délimitée par une bordure d'extrémité.

3. Dispositif selon l'une quelconque des revendications 1 et 2, caractérisé par le fait que l'élément d'adaptation présente la forme d'une plaquette et les moyens prévus sur ledit élément d'adaptation et permettant sa réception entre les gorges en regard des flasques du corps sont constitués par deux faces droites parallèles d'extrémité de l'élément d'adaptation, dont l'écartement correspond à la distance entre les fonds des gorges en regard des flasques dudit corps, et dont l'épaisseur correspond à la largeur desdites gorges.

4. Dispositif selon l'une quelconque des revendications précédentes, caractérisé par le fait que le corps présente sur les faces externes de ses flasques des pattes en saillie sur lesquelles peuvent s'engager par des orifices correspondants des languettes d'un accessoire tel qu'un pare-soleil.

5. Dispositif selon l'une quelconque des revendications précédentes, caractérisé par le fait que l'élément d'adaptation comporte des pattes en saillie sur lesquelles peuvent s'engager par des orifices correspondants des languettes d'un accessoire tel qu'un pare-soleil.

6. Pare-soleil destiné à être utilisé avec le dispositif selon l'une des revendications 4 ou 5 et comportant un boîtier creux, notamment de section carrée à bords arrondis, caractérisé par le fait qu'il présente dans le prolongement de deux de ses faces opposées des languettes munies d'orifices pour l'engagement de pattes en saillie correspondantes portées par ledit corps et/ou l'élément d'adaptation.

7. Pare-soleil selon la revendication 6, caractérisé par le fait qu'il comporte en outre, dans deux faces internes opposées de son boîtier, des pattes en saillie similaires à celles portées par les flasques dudit corps et permettant la fixation du pare-soleil sur ledit corps et/ou sur un autre pare-soleil.

8. Pare-soleil selon l'une quelconque des revendications 6 et 7, caractérisé par le fait qu'il comporte dans deux faces internes opposées du boîtier des évidements réalisant des orifices similaires à ceux portés par ses languettes.

**Claims**

1. Accessory mounting device for photographic camera, comprising a body (1), an intermediate mounting element (2) for fitting the body to the object lens of the camera, said mounting element being constituted of a removable ring (3) equipped with an external thread for screwing it onto the object lens, said ring being adapted to be positioned in a corresponding seating of said body in such a manner as to permit a relative rotational movement of said body with respect to said object lens, said body possessing, in addition, on its side remote from the seating for said ring, at least one pair of throats permitting the reception of a photographic accessory (20), notably a filter, characterized by the fact that it comprises at least one adapter element (10) comprising, on the one hand, means (18, 19) for placing it in the seating (5) provided in said body (1) for the reception of the mounting ring (2), said means permitting a relative rotation of the adapter element with respect to said body while at the same time assuring its lateral immobilization in said body, and, on the other hand, means (11, 12) for positioning the adapter element (10) between the facing throats of the opposite cheeks (8) of the body, said means for positioning between the throats permitting the sliding translatory displacement of the adapter element relative to said body.

2. Device according to claim 1, characterized by the fact that the means provided on said adapter element and permitting its rotation relative to said body comprise a flange projecting radially from said element and terminated by an edge rim.

3. Device according to any one of claims 1 and 2, characterized by the fact that the adapter element has the form of a plate and the means provided on said adapter element and permitting its reception between the facing throats of the cheeks of the body are constituted of two straight, parallel edge faces of the adapter element, the spacing between which corresponds to the distance between the bases of the facing throats of the cheeks of said body, and the thickness of which corresponds to the width of said throats.

4. Device according to any one of the preceding claims, characterized by the fact that the body possesses, on the external faces of its cheeks, projecting lugs on which there can engage, by corresponding orifices, tongues of an accessory such as a lens shade.

5. Device according to any one of the preceding claims, characterized by the fact that the adapter element comprises projecting lugs, onto which there can engage, by corresponding orifices, tongues of an accessory such as a lens shade.

6. Lens shade intended to be used with the device according to one of claims 4 or 5 comprising a hollow box, notably of square section with rounded edges, characterized by the fact that it possesses, in the continuation of two of its opposite faces, tongues equipped with orifices for the engagement of the corresponding projecting lugs carried by said body and/or the adapter element.

7. Lens shade according to claim 6, characterized by the fact that it comprises in addition, in two opposite internal faces of its box, projecting lugs similar to those carried by the cheeks of said body and permitting the fixing of the lens shade onto said body and/or onto another lens shade.

8. Lens shade according to any one of claims 6 and 7, characterized by the fact that it comprises, in two opposite internal faces of the box, recesses forming orifices similar to those carried by its tongues.

**Ansprüche**

1. Zubehörteil-Vorsatz für Bildaufnahmegeräte, insbesondere für Sonnenblenden, mit einem Halter (1) und mit einem Zwischenelement (2) für die Befestigung des Halters am Objektiv des Bildaufnahmegerätes, das aus einem abnehmbaren Ring (3) besteht, der ein Außengewinde zum Anschrauben auf das Objektiv aufweist und so in einer Auskehlung des Halters einsetzbar ist, daß er eine Relativdrehung des Halters in Bezug auf das Objektiv ermöglicht, wobei der Halter weiterhin auf seiner, der Auskehlung für den Ring entgegengesetzten Seite mindestens ein Paar Nuten, Rillen oder dergleichen aufweist, die zur Aufnahme eines photographischen Zubehörteils (20), insbesondere eines Filters, dienen, dadurch gekennzeichnet, daß der Zubehörteil-Vorsatz mindestens ein Adaptorelement (10) hat, das einerseits eine Halteeinrichtung (18, 19) für seine Befestigung in der für die Aufnahme des Ringes (2) in dem Halter (1) vorgesehenen Ausnehmung (5) hat, wobei diese Halteeinrichtung eine Relativdrehung des Adaptorelementes bezüglich des Halters, aber kein seitliches Verschieben gegenüber dem Halter zuläßt und daß andererseits eine Halteeinrichtung (11, 12) für die Befestigung des Adaptorelementes (10) zwischen den den gegenständigen Flanschen (8) des Halters gegenüberliegenden Nuten aufweist, wobei diese Halteeinrichtung für die Befestigung zwischen den Nuten eine geradlinige Verschiebebewegung des Adaptorelementes bezüglich des Halters zuläßt.

2. Zubehörteil-Vorsatz nach Anspruch 1, dadurch gekennzeichnet, daß die an dem Adaptorelement vorgesehene und seine Relativdrehung bezüglich des Halters ermöglichende Halteeinrichtung einen Kragen aufweist, der radial an diesem Adaptorelement vorspringt und durch eine äußere Kante begrenzt ist.

3. Zubehörteil-Vorsatz nach Anspruch 1 oder 2, dadurch gekennzeichnet, daß das Adaptorelement die Form eines Plättchens hat und daß die am Adaptorelement vorgesehene und seinen Halt zwischen den Nuten, die den Flanschen des Halters gegenüberstehen, ermöglichende Halteeinrichtung durch zwei gerade und parallele Flächen des Endbereichs dieses Adaptorelementes gebildet wird, deren Entfernung dem Abstand zwischen den Böden der Nuten, die den Flanschen des Halters gegenüberstehen, entspricht und deren Dicke der Breite dieser Nuten entspricht.

4. Zubehörteil-Vorsatz nach einem der Ansprüche 1 bis 3, dadurch gekennzeichnet, daß der Halter auf den Außenflächen seiner Flansche vorspringende Klauen aufweist, in die mit entsprechenden Öffnungen versehe Zungen eines Zubehörteils wie zum Beispiel einer Sonnenblende eingreifen können.

5. Zubehörteil-Vorsatz nach einem der Ansprüche 1 bis 4, dadurch gekennzeichnet, daß das Adaptorelement vorspringende Klauen aufweist, in die mit entsprechenden Öffnungen versehene Zungen eines Zuberhörteils, wie zum Beispiel einer Sonnenblende, eingreifen können.

6. Sonnenblende für die Verwendung mit einem Zubehörteil-Vorsatz nach einem der Ansprüche 4 oder 5, die ein hohles und insbesondere einen quardratischen Querschnitt mit abgerundeten Kanten aufweisendes Gehäuse hat, dadurch gekennzeichnet, daß sie in einer Verlängerung zweier von ihrer gegenüberliegenden Flächen mit Öffnungen versehene und für den Eingriff in entsprechebde, vorspringe und am Halter und/oder am Adaptorelement angeordnete Klauen bestimmte Zungen aufweist.

7. Sonnenblende nach Anspruch 6, dadurch gekennzeichnet, daß sie zudem auf zwei ihrer gegenüberliegenden Innenflächen ihres Gehäuses vorspringende Klauen aufweist, die ähnlich den an den Flanschen des Halters angeordneten Klauen sind und eine Befestigung der Sonnenblende an diesem Halter und/oder an einer anderen sonnenblende ermöglichen.

8. Sonnenblende nach Anspruch 6 oder 7, dadurch gekennzeichnet, daß sie auf zwei ihrer gegenüberliegenden Innenflächen ihres Gehäuses Ausnehmungen aufweist, die Öffnungen ähnlich denjenigen der Zungen haben.

*Fig:1*

*Fig:2*

*Fig:3*

*Fig:4*

*Fig:5*

*Fig:6*